(19) Europäisches Patentamt
European Patent Office
Office européen des brevets

(11) Publication number: **0 050 167**
**B1**

(12) **EUROPEAN PATENT SPECIFICATION**

(45) Date of publication of patent specification: **10.04.85**

(51) Int. Cl.[4]: **G 01 N 30/00**, B 01 J 20/32, C 08 G 83/00

(21) Application number: **80200996.9**

(22) Date of filing: **20.10.80**

(54) **Process for making a chromatographic-column packing having a bonded organosiloxane coating, and process for making a chromatographic separation.**

(43) Date of publication of application:
**28.04.82 Bulletin 82/17**

(45) Publication of the grant of the patent:
**10.04.85 Bulletin 85/15**

(84) Designated Contracting States:
**DE FR GB IT NL**

(56) References cited:
**DE-A-2 605 789**
**US-A-3 795 313**
**US-A-3 960 521**
**US-A-4 017 528**
**US-A-4 199 330**

**JOURNAL OF CHROMATOGRAPHY, vol. 53, 1970, Elsevier, AMSTERDAM (NL), C. R. HASTINGS et al.: "Surface-bonded silicones from, volatile monomers for chromatography", pages 487-506**
**JOURNAL OF CHROMATOGRAPHY, vol. 42, 1969, Elsevier, AMSTERDAM (NL), W.A. AVE et al.: "Preparation and chromatography uses of surface-bonded silicones", pages 319-335**

(73) Proprietor: **THE DOW CHEMICAL COMPANY**
**Dow Center 2030 Abbott Road Post Office Box 1967**
**Midland Michigan 48640 (US)**

(72) Inventor: **Nestrick, Terry John**
**508 George Street Midland**
**Midland Michigan (US)**
Inventor: **Stehl, Rudolph Herman**
**3900 Cambridge Midland**
**Midland Michigan (US)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

(56) References cited:
**ANALYTICAL CHEMISTRY, vol. 49, no. 12, October 1977, COLUMBUS OHIO (US), E. GRUSHKA et al.: "Chemically bonded stationary phases in chromatography", pages 1044A-1012A**

**EP 0 050 167 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention concerns improved siliceous packings having chemically bonded polysiloxane coatings for use in gas chromatographic analysis and a process for making these packings. Chromatographic apparatus based on these bonded packings and the analytical methods thereby made possible are also parts of the invention.

The field of chromatographic analysis has expanded rapidly in recent years and many refinements in apparatus, in analytical methods, and in the packings for chromatographic columns have been developed in response to the ever-increasing demand for faster and more sophisticated analyses and the need for differentiating and identifying extremely small concentrations of compounds, some of which may be structurally closely related. As a result of these pressures, many modifications of chromatographic column packing materials have been made to improve their properties. Gas chromatography in which a mixture of a carrier gas and the vapor of a substance to be separated into its individual component compounds is contacted with a chromatographic packing has become increasingly useful. Siliceous supports such as glass beads, silica beads, silica gel, and diatomaceous earth have been physically coated or coated by chemical bonding with various organic materials to deactivate the active surface of the support and to provide more efficient use of the desirable chromatographic properties of the coating material itself.

Aue et al., J. Chromatogr. *42*, 319 (1969), Majors et al., J. Chromatogr. Sci. *12*, 767 (1974), and Grushka et al., Anal. Chem. *49*, 1005A (1977) are representative of many publications in this area of investigation which describe the preparation for chromatographic use of siliceous column packings having siloxane polymer molecules chemically bonded to their surface. These preparations typically are based on the reaction of an acid-activated silica surface with an organopolychlorosilane in a solvent solution with water present to cause hydrolysis and polymerization. The terminal hydroxyl groups on the polymer molecules thereby chemically bonded to the silica surface are then inactivated by a capping reaction with trimethylchlorosilane or similar silicon compound. Alternatively, terminal chlorosilyl groups can be inactivated by reaction with an alcohol such as methanol to produce a terminal ether substituent. The bonded products have non-extractable siloxane polymer coatings of up to 5—10 percent by weight and are useful as column packings for chromatographic use. However, these relatively heavy coatings of polymer prepared in this way do not coat the silica surface uniformly and the coated supports do not have the optimum chromatographic properties which are particularly required in gas chromatography.

An improved method has now been discovered by which an active silica or other active siliceous surface can be coated uniformly by a relatively very thin layer of organosiloxane polymer molecules bonded chemically to the surface and covering the surface so as to negate surface activity essentially completely. The bonded product has properties useful in gas chromatography that were not obtainable by previously known methods of preparation.

It has been found that a column packing having greatly improved gas chromatographic properties is obtained by a particular combination of chemical reactions whereby an acid-activated siliceous surface is rendered capable of having grafted thereto molecules of an organosiloxane polymer polyol, thereby making possible a uniform coating of organosiloxane polymer molecules of similar length and configuration chemically bonded to the siliceous surface. The process that provides this result comprises:

(a) reacting by contacting an acid-activated siliceous surface with $SiCl_4$, thereby causing substantial chlorosilylation of said surface,

(b) reacting by contacting the chlorosilylated surface with water vapor until essentially all of the chlorosilyl groups have been hydrolyzed to hydroxysilyl groups,

(c) reacting by contacting the hydrolyzed surface with excess dichlorisilane of the formula $RR'SiCl_2$ wherein R and R′ each represent a methyl, ethyl, or vinyl radical for a time sufficient to react at least the major proportion of the hydroxysilyl groups to form corresponding disubstituted chlorosilyl groups,

(d) reacting by contacting the reacted product of (c) with water vapor until essentially all of the disubstituted chlorosilyl groups have been hydrolyzed to corresponding disubstituted hydroxysilyl groups,

(e) reacting by contacting the hydrolyzed product of (d) with $SiCl_4$ for a time sufficient to react substantially all of said disubstituted hydroxysilyl groups to form silyloxy chlorosilyl groups, and

(f) reacting by contacting the chlorosilylated product of (e) with a molar excess over said silyloxy chlorosilyl groups of an organosiloxane polymer polyol in the liquid state, said polyol having a molecular weight of at least about 230 and having a molecular structure consisting essentially of repeating units of the formula

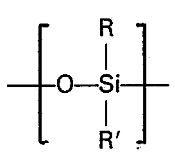

thereby reacting essentially all of said silyloxy chlorosilyl groups with said polyol to form pendant polyol residues having at least one terminal hydroxyl group per residue.

The above sequence of reactions (a) through (f) is preferably repeated at least once and most

preferably, repeated about 1—4 times to produce a final product where the total organosiloxane polymer coating amounts to about 0.05—1 percent based on the weight of the support.

The terminal hydroxyl groups on the bonded polyol residues after the final polymer reaction step (f) above are preferably inactivated by any of several etherification procedures before the coated support is used for chromatographic analysis. These procedures include the following:

(1) The terminal hydroxyl groups can be reacted directly by contacting the bonded coating with a trimethylsilyl capping reagent such as trimethylsilicon chloride, N,N-bis(trimethylsilyl)acetamide, or hexamethyldisilazane at any convenient temperature. Reaction with gaseous $(CH_3)_3SiCl$ at about 50°C—275°C is preferred.

(2) The terminal hydroxyl groups on the pendant polyol residues are preferably reacted with the chlorosilylation reagents $SiCl_4$ and a dichlorosilane of the formula $RR''SiCl_2$ with a hydrolysis step following each reaction using the respective conditions of steps (a), (b), (c), and (d) above and a final etherification or capping reaction as in (1). One or both of the chlorosilylation reaction-hydrolysis combinations may be repeated at least once and the order of reactions may be reversed, i.e., (c)-(d)-(a)-(b), prior to the capping reaction. In the dichlorosilane reagent $RR''SiCl_2$, R is as previously defined and R'' represents R, phenyl, 2-cyanoethyl, 3-cyanopropyl, 3,3,3-trifluoropropyl, or other such hydrocarbon or substituted hydrocarbon radical. The R and R'' substituents can be varied as desired to obtain particular polarity characteristics at the free ends of the bonded polymer molecules which serve as the working stationary phase of the coated support and the finished packing is thereby adapted for optimum efficiency in different chromatographic separations.

The reactions with $SiCl_4$, steps (a) and (e) in the process outlined above, can be carried out with either liquid silicon tetrachloride, conveniently in inert solvent solution, or with the gaseous reagent, preferably as mixed with nitrogen or other inert gas. Reaction with the liquid chloride is subject to practical temperature limitations and is usually carried out at about 0°C—50°C. The preferred reaction with $SiCl_4$ vapors is faster and more complete and a wider range of reaction temperature is available in practice, for example, a range of about 100°C—275°C is preferred for this mode although any convenient temperature within a broad range of about 0°C—300°C can be used effectively.

Step (c) above, the reaction of $RR'SiCl_2$ with the hydrolyzed chlorosilylated surface, is also preferably run using vapors of the organosilicon dichloride, for example, mixed with an inert carrier or diluent gas such as nitrogen. The other reactions involving a vapor phase reagent, i.e., the hydrolysis steps and the reactions with $SiCl_4$ are also preferably run in this way, for example, by bubbling nitrogen through the liquid reagent at an appropriate temperature and passing the vapor-laden gas through a tube containing a permeable bed of the particulate support.

Step (c) can also be run using the liquid organosilicon dichloride, preferably in an inert solvent solution. The siloxane polymer reaction in Step (f) is also run in this fashion and the optional reaction with organosilicon dichlorides described in (2) above usually is run this way because the vapor pressure of the reagent may preclude a gas phase reaction. Inert solvents suitable for use in these liquid phase reactions include the common hydrocarbon and chlorinated hydrocarbon solvents which are inert under process conditions to silicon chlorides and the HCl by-product. Such reactions using a solvent solution of a siloxane polymer or an organic silicon chloride are preferably run by passing the solution through the bed of support at a temperature in the low part of the range specified, then raising the temperature gradually to a middle or higher part of that range to remove the solvent by a flow of inert gas and to complete the reaction. Excess unreacted polymer or silicon chloride can be removed by flushing with solvent.

In general, the reactions of $SiCl_4$ or an organochlorosilane with hydroxyl groups, the reaction of an organosiloxane polymer polyol with a chlorosilylated product, or the hydrolysis of a chlorosilylated product with water vapor all take place at some rate at any temperature where the silicon chloride, polyol, or water vapor reactant can be contacted in gaseous or liquid state as appropriate with reactive surface-bound radicals so long as the temperature is below that where thermal decomposition occurs. Therefore, temperatures for these reactions are limited only by practical considerations.

Broad practical and narrower preferred temperature ranges for the various steps listed above are as follows:

For the reactions with $SiCl_4$, about 0°C—300°C and for the preferred gaseous $SiCl_4$ reaction, about 100°C—275°C.

For the various hydrolysis reactions, about 0°C—250°C, preferably about 25°C—200°C.

For the reactions with $RR'SiCl_2$ and $RR''SiCl_2$, about 0°C—250°C, preferably about 25°C—200°C.

For the reaction with siloxane polymer, about 0°C—300°C, preferably about 100°C—275°C.

For the reaction with $(CH_3)_3$ SiCl or other capping reagent, about 0°C—300°C, preferably about 50°C—275°C.

The surface-activated siliceous supports specified for use with this process are those conventionally used in the art for similar bonding procedures, a silica or other siliceous solid which has been exposed to liquid or gaseous strong acid such as hydrochloric acid or nitric acid to increase the proportion of hydroxyl groups chemically bonded to silicon atoms at the solid surface. Such surface-activated materials are thereby provided with an optimum number of reactive sites to which molecules of the desired coating can be chemically bonded.

Organosiloxane polymers of any molecular weight can be used in the preparation, i.e., from a

minimum of 166 which represents the dimer having two dimethylsiloxane units to high molecular weight polymers having hundreds or thousands of siloxane units per molecular. Polymers having an average molecular weight in the approximate range of 1,000—20,000 are preferred.

Siloxane polymers as defined above are available commercially, particularly the preferred polydimethylsiloxane of which the molecular structure consists essentially of repeating dimethylsilyloxy units. These polymers ordinarily have more than two hydroxyl groups per molecule, indicating that their molecular structure is branched to some degree, thus departing from the theoretical linearity.

In order to maximize the number of the relatively bulky polymer molecules that can be bonded to a unit of surface area, it is usually desirable to repeat at least once the combination of steps (c) and (d) above, i.e., the reaction of $RR'SiCl_2$ and subsequent hydrolysis following the initial chlorosilylation of the surface with $SiCl_4$. The repeated steps (c) and (d) are advantageously overlapped to a degree by contacting the hydrolyzed chlorosilylated surface with the $RR'SiCl_2$ reagent in the presence of a small amount of water, thereby causing some hydrolysis and polymerization along with the reaction of the organic silicon dichloride with the surface bound hydroxyl groups. This can be done by passing wet nitrogen through or by the liquid silicon dichloride to contact the treated siliceous support. In this way, relatively short siloxane polymer molecules with terminal hydroxyl groups bonded to the support surface are formed prior to the second chlorosilylation reaction with $SiCl_4$. The subsequent reaction with the terminal hydroxyl groups on those siloxane polymer molecules in step (f) is thereby moved farther from the siliceous surface and so is less subject to hindrance of the reaction by that surface.

The surface-bonded polysiloxane coatings prepared by this process maintain the general chemical characteristics of unbonded silicone polymers as stationary phases. Thus, the chromatographic column packings described herein have a high degree of thermal stability and possess an extended operational temperature range up to about 300°C. They are highly resistant to hydrolysis, are inert to most chromatographable substances, and show very low "bleed" of the stationary phase. The extremely thin, uniform film thickness of the bonded coating offers high chromatographic efficiency with a wider spectrum of analyzable compounds and reduced analysis times as compared to previously known chromatographic column packings.

These packings are further versatile in that they can be modified easily by light coatings of very polar to very non-polar conventional stationary phases without significant sacrifice of efficiency. In this preferred modification and use of the packings of this invention, these silicone-bonded packings serve essentially as very inert supporting materials. By the choice of an appropriate conventional stationary phase to coat on these bonded packings, the resulting modified packing is thereby tailored to a specific analytical application for maximum efficiency. Such physically bound coatings can be applied by conventional means for coating conventional supports. Ordinarily, this is accomplished by applying a solution of the coating in an inert solvent of relatively low boiling point and evaporating the solvent from the wetted support. Solvents such as benzene, toluene, methanol, acetone, chloroform, and methylene chloride are examples of solvents commonly used for the purpose. Illustrative stationary phases are the organic polymers conventionally used in chromatography such as polyalkylene glycols, polyamides, polyphenyl ether, polyphenyl sulfone, and organosiloxane polymers. Mixtures of two or more of these can also be used. A relatively small amount of stationary phase is usually applied, for example, about 0.1—5 percent based on the weight of support. A coating concentration of about 0.2—1 percent is preferred.

Both the bonded silicone packings and those having an added coating of stationary phase as described above provide fast and accurate chromatographic determinations in applications such as quality control of commercial chemical products by analysis for impurities, in pollution control by determination of trace amounts of polyhalogenated aromatic compounds in water, and in refinery operations where rapid determination of boiling range and identification of components of petroleum fractions facilitate process control.

Example 1

The reaction apparatus was an all glass assembly wherein the reactor was a 15 mm I.D.×700 mm Pyrex glass tube heated by an electrical clamshell furnace and connected to a source of nitrogen. The diatomaceous earth support to be treated formed a bed held in place within the reactor tube by glass wool plugs. Volatile reactants were carried by the nitrogen stream through the bed and were supplied by means of one or both of a bubbler flask containing the liquid reactant and connected to the reactor by three-way stopcocks and an insert in the heated forepart of the reactor tube consisting of a section of glass tubing containing a plug of glass wool wet with the volatile reactant. For solvent extraction or reaction of the diatomite bed with a nonvolatile reactant, the reactor tube was turned on end and solvent or solvent solution of reactant was dripped into the diatomite bed, the liquid flow into and through the bed being assisted by nitrogen pressure of less than one atmosphere. Subsequent nitrogen flow and heating removed the solvent and completed the reaction.

A portion of 80—100 mesh Chromosorb W, a diatomaceous silica specially processed by Johns-Manville Corp. for chromatographic use, was extracted for about 12 hours in a Soxhlet apparatus with constant boiling hydrochloric acid, then was thoroughly washed successively with water, methanol, and methylene chloride and finally was air dried. A 20 g portion of this material was put in the tube reactor and the silica surface was further activated by first passing about 45 ml/min. nitrogen through the silica bed

while raising the temperature in 40°C steps to 200°C in about 40 minutes, then essentially saturating the incoming nitrogen with HCl and water vapor by passing it through a bubbler flask containing concentrated hydrochloric acid. The HCl-saturated nitrogen stream was continued for 1.5 hours at 200°C, then the bubbler was bypassed and the bed was purged with pure nitrogen for 15 minutes while the temperature was reduced to 150°C. A succession of reaction and purge steps was then conducted as summarized in the following table. Except for the solution reactions and solvent extractions noted below, the nitrogen flow remained at 45 ml/min. whether pure for a purge or containing reactant vapor from the bubbler, saturated glass wool, or both. Where a temperature range is given, the first temperature indicates the initial temperature of the time period for that step and the second temperature given is the final temperature of that period.

TABLE 1

| Time min. | Treatment or reactant | Temp. °C |
|---|---|---|
| 30 | $SiCl_4$ | 150 |
| 30 | $H_2O$ | 150-ambient |
| 40 | $(CH_3)_2SiCl_2$ | ambient-150 |
| 20 | $H_2O$ | 150-ambient |
| 15 | $(CH_3)_2SiCl_2$ | ambient |
| 20 | $(CH_3)_2SiCl_2+H_2O$[1] | ambient-150 |
| 15 | $N_2$ purge | 150 |
| 20 | $SiCl_4$ | 150 |
| 25 | $N_2$ purge | 150-ambient |
| 35 | 0.5 g polydimethyl-siloxane[2] in 65 ml $CH_2CL_2$ | ambient-230 |
| 20 | $SiCl_4$ | 230—150 |
| 35 | $H_2O$ | 150-ambient |
| 15 | $(CH_3)_2SiCl_2$ | ambient |
| 15 | $(CH_3)_2SiCl_2+H_2O$[1] | ambient-150 |
| 30 | $N_2$ purge | 150 |
| 30 | $SiCl_4$ | 175 |
| 15 | $N_2$ purge | 175-ambient |
| 25 | 0.5 g polydimethyl-siloxane[2] in 65 ml $CH_2Cl_2$ | ambient-230 |
| 25 | $SiCl_4$ | 230—150 |
| 25 | $H_2O$ | 150-ambient |
| 20 | $(CH_3)_2SiCl_2$ | ambient |
| 20 | $(CH_3)_2SiCl_2+H_2O$[1] | ambient-150 |
| 15 | $N_2$ purge | 150 |
| 20 | $SiCl_4$ | 150 |

TABLE 1 (Cont'd.)

| Time min. | Treatment or reactant | Temp. °C |
|---|---|---|
| 10 | Purge | 150-ambient |
| 45 | 0.5 g polydimethyl-siloxane[2] in 65 ml $CH_2Cl_2$ | ambient-275 |
| 25 | $SiCl_4$ | 275—150 |
| 20 | $H_2O$ | 150-ambient |
| 20 | $(CH_3)_2SiCl_2$ | ambient |
| 15 | $(CH_3)_2SiCl_2+H_2O$ | ambient-150 |
| 15 | $H_2O$ | 150 |
| 15 | $N_2$ purge | 150—230 |

[1] The nitrogen stream was first bubbled through water and then passed through glass wool wet with $(CH_3)_2SiCl_2$.
[2] Polydimethylsiloxane with terminal hydroxyl groups, viscosity at 25°C=50 centistokes. This polymer had an average molecular weight of about 3000 with about four hydroxyl groups per molecule, indicating some degree of branching in its structure.

The reactor was cooled to ambient temperature at this point and the bed of treated silica was removed and washed with acetone and chloroform to remove bulk polymer. It was then air dried, screened through a 60 mesh screen and put back into the reactor tube. The reactor was then heated to 230°C with nitrogen passing through.

| Time min. | Treatment or reactant | Temp. °C |
|---|---|---|
| 55 | $(CH_3)_3SiCl$ | 230 |
| 20 | $N_2$ purge | 230—270 |

The reactor was then cooled and the treated silica was removed and used to pack a chromatographic column for evaluation.

Example 2 describes the preparation by the same general procedure of a bonded silicone packing in which the polydimethylsiloxane molecular chains bonded to the silica surface are grafted to polysiloxane molecules having both methyl and 2-cyanoethyl substituents.

Example 2

The apparatus of Example 1 was used to treat a 21.7 g portion of Chromosorb W by the same general bonding procedure. The Chromosorb W was first given the acid treatments described in Example 1.

TABLE 2

| Time min. | Treatment or reactant | Temp. °C |
|---|---|---|
| 25 | $SiCl_4$ | 150 |
| 30 | $H_2O$ | 150-ambient |
| 15 | $(CH_3)_2SiCl_2$ | ambient |
| 15 | $(CH_3)_2SiCl_2+H_2O$ | ambient-150 |
| 20 | $H_2O$ | 150-ambient |
| 20 | $(CH_3)_2SiCl_2$ | ambient |

TABLE 2 (Cont'd.)

| Time min. | Treatment or reactant | Temp. °C |
|---|---|---|
| 20 | $(CH_3)_2SiCl_2+H_2O$ | ambient-150 |
| 15 | $N_2$ purge | 150—180 |
| 20 | $SiCl_4$ | 180 |
| 5 | $N_2$ purge | 180-ambient |
| 50 | 0.5 g polydimethyl-siloxane[1] in 75 ml $CH_2Cl_2$ | ambient-230 |
| 15 | $SiCl_4$ | 230—150 |
| 35 | $H_2O$ | 150-ambient |
| 15 | $(CH_3)_2SiCl_2$ | ambient |
| 20 | $(CH_3)_2SiCl_2+H_2O$ | ambient-150 |
| 15 | $N_2$ purge | 150 |
| 10 | $SiCl_4$ | 150 |
| 10 | $N_2$ purge | 150-ambient |
| 70 | 0.5 g polydimethyl-siloxane[1] in 75 ml $CH_2Cl_2$ | ambient-230 |
| 30 | $SiCl_4$ | 150 |
| 30 | $H_2O$ | 150-ambient |
| 15 | $(CH_3)_2SiCl_2$ | ambient |
| 25 | $(CH_3)_2SiCl_2+H_2O$ | ambient-150 |
| 20 | $N_2$ purge | 150 |
| 30 | $SiCl_4$ | 150 |
| 5 | $N_2$ purge | 150-ambient |
| 55 | 0.5 g polydimethyl-siloxane[1] in 75 ml $CH_2Cl_2$ | ambient-150 |
| 30 | $H_2O$ | 250—150 |
| 60 | solvent flush using acetone, toluene, and then chloroform to remove bulk polymer, dried at 50°C with 200 ml/min. $N_2$ | ambient-50 |
| 15 | 1 g $CH_3(CNCH_2CH_2)SiCl_2$ in 75 ml $CH_2Cl_2$ | ambient-150 |
| 40 | $H_2O$ | 150—200 |

TABLE 2 (Cont'd.)

| Time min. | Treatment or reactant | Temp. °C |
|---|---|---|
| 15 | $N_2$ purge | 200 |
| 20 | $SiCl_4$ | 200 |
| 25 | $H_2O$ | 200-ambient |
| 30 | 1 g $CH_3(CNCH_2CH_2)SiCl_2$ in 75 ml $CH_2Cl_2$ | ambient-150 |
| 30 | $H_2O$ | 150—200 |
| 15 | $N_2$ purge | 200—250 |
| 15 | $SiCl_4$ | 250—200 |
| 50 | $H_2O$ | 200-ambient |
| 10 | 1 g $CH_3(CNCH_2CH_2)SiCl_2$ in 75 ml $CH_2Cl_2$ | ambient-90 |
| 55 | $H_2O$ | 90—200 |
| 15 | $N_2$ purge | 200—250 |
| 60 | solvent flush as above, dried under $N_2$ at 40°C | ambient |
| 15 | $N_2$ purge | 40—230 |
| 30 | $(CH_3)_3SiCl$ | 230 |
| 30 | $N_2$ purge | 230—250-ambient |

[1] The polydimethylsiloxane with terminal hydroxyl groups used in Example 1.

The treated packing was screened through a 60 mesh screen to remove lumps and then was used to pack a chromatographic column for evaluation.

The bonded packings prepared as described in Examples 1 and 2 were packed in 2 mm I.D.×180 cm glass columns for chromatographic testing. The glass columns were preconditioned by rinsing successively with methylene chloride, methanol, acetone, water, concentrated hydrochloric acid (allowed to stand for about ten minutes), water, acetone, methanol, methylene chloride, and air dried. They were then filled with about 20 percent by volume dimethyldichlorosilane in toluene, allowed to stand for about 15 minutes, then rinsed with methanol followed by methylene chloride, and air dried. The columns thus preconditioned were packed using several cycles of vibration followed by gentle suction to obtain maximum bed settling. The packed column was installed in a commercially available gas chromatograph, flushed with helium at room temperature for 15 minutes, then heated to 300°C at a rate of 10°C per minute for the packing products of Examples 1 and 2, and maintained at 300°C for 4 hours before use with a flow of 35 ml/min. of helium.

These packings proved to be easily stable to extended operation at 350°C and provided outstanding gas chromatographic test results with high efficiency and improved retention.

Example 3

Another portion of Chromosorb W was treated with hydrochloric acid and washed as described in Example 1. The treated silica was then reacted with $SiCl_4$, a dichlorosilane, and the polydimethylsiloxane with intermediate hydrolyses and final capping with $(CH_3)_3SiCl$ essentially as shown in Example 1 with the exception that the dichlorosilane used was methylvinylsilicon dichloride instead of dimethylsilicon dichloride. In this way, a bonded silicone packing was obtained in which some of the methyl groups in the polydimethylsiloxane molecular chains bonded to the silica had been replaced by vinyl groups. This material had chromatographic characteristics essentially the same as those of the all methyl-substituted product of Example 1.

Example 4—7

Portions of the bonded polydimethylsiloxane product of the process of Example 1 were wet with chloroform solutions of various polymers and dried to obtain coated packings which were used for chromatographic detection of traces of halogenated aromatic contaminants in environmental samples.

| Example No. | Coating, wt. % | Halogenated contaminant |
|---|---|---|
| 4 | polyphenyl sulfone 0.6% | chlorinated dibenzo-p-dioxins |
| 5 | polyphenyl sulfone 0.4% methylphenyl polysiloxane 0.6% | chlorinated dibenzo-p-dioxins |
| 6 | poly(m-phenyl)ether 0.6% | chlorinated dibenzo-p-dioxins |
| 7 | Dexsil 300[1] silicone 0.75% | polybrominated biphenyl |

[1] A meta-substituted carborane-polymethylsiloxane made by Dexsil Corporation.

Example 8

A portion of the bonded polysiloxane product of Example 2 wherein the bonded silicone molecules had some 2-cyanoethyl substituents in addition to the methyl groups was coated with 0.5 percent by weight of Silar 10C, a poly(3-cyanopropyl) silicone made by Silar Laboratories, by the technique described in Examples 4—7. The dried coated packing was used for accurate chromatographic determination of traces of chloromethyl methyl ether and bis-(chloromethyl) ether in various media by the methods previously described.

**Claims**

1. A process for making a chromatographic column packing by chemically bonding a siloxane polymer coating to the surface of a siliceous solid, characterised by the steps of:

(a) reacting by contacting an acid-activated siliceous surface with $SiCl_4$, thereby causing substantial chlorosilylation of said surface,

(b) reacting by contacting the chlorosilylated surface with water vapor until essentially all of the chlorosilyl groups have been hydrolyzed to hydroxysilyl groups,

(c) reacting by contacting the hydrolyzed surface with excess dichlorosilane of the formula $RR'SiCl_2$ wherein R and R' each represent a methyl, ethyl, or vinyl radical for a time sufficient to react at least the major proportion of the hydroxysilyl groups to form corresponding disubstituted chlorosilyl groups,

(d) reacting by contacting the reacted product of (c) with water vapor until essentially all of the disubstituted chlorosilyl groups have been hydrolyzed to corresponding disubstituted hydroxysilyl groups,

(e) reacting by contacting the hydrolyzed product of (d) with $SiCl_4$ for a time sufficient to react substantially all of said disubstituted hydroxysilyl groups to form silyloxy chlorosilyl groups, and

(f) reacting by contacting the chlorosilylated product of (e) with a molar excess over said silyloxy chlorosilyl groups of a siloxane polymer polyol in the liquid state, said polyol having a molecular weight of at least about 230 and having a molecular structure consisting essentially of repeating units of the formula

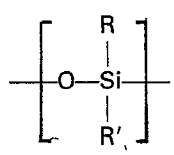

thereby reacting essentially all of said silyloxy chlorisilyl groups with said polyol to form pendant polyol residues having at least one terminal hydroxyl group per residue.

2. The process of Claim 1 wherein the sequence of steps (a) through (f) is repeated from one to about four times.

3. The process of Claim 2 wherein steps (a) and (e) are run using gaseous $SiCl_4$ at about 0°C—300°C, the hydrolyses in steps (b) and (d) are run with water vapor at about 0°C—250°C, the reaction with $RR'SiCl_2$ in step (c) is run at about 0°C—250°C, and the polymer polyol reaction in step (f) is run at about 0°C—300°C.

4. The process of Claim 2 wherein following the final sequence of steps (a) through (f), the product of the final step (f) is reacted by contacting with a trimethylsilyl capping reagent, thereby etherifying essentially all of the terminal hydroxyl groups on the pendant polyol residues with trimethylsilyl groups.

5. The process of Claim 2 wherein the product of the final step (f) is reacted in any alternating order at least once with each of the chlorosilylation reagents $SiCl_4$ and $RR''SiCl_2$ where R'' is R, phenyl, 2-cyanoethyl, 3-cyanopropyl, or 3,3,3-trifluoropropyl, each such chlorosilylation reaction followed by a hydrolysis step, said chlorosilylation reactions and said hydrolysis steps carried out as defined in steps (a), (c), and (b) respectively, and the final hydrolyzed product thereof is reacted at about 0—300°C with a trimethylsilyl capping reagent.

6. The process of Claim 5 wherein the capping reagent is gaseous $(CH_3)_3SiCl$ and the capping reaction is carried out at about 50°C—275°C.

7. The process of Claim 5 wherein R, R' and R'' each represent a methyl group.

8. The process of Claim 5 wherein R and R' each represent a methyl group and R'' is a 2-cyanoethyl group.

9. The process of Claim 5 wherein R and R' each represent a methyl group and R'' is a vinyl group.

10. The process of Claim 4 wherein the trimethylsilyl-capped product is coated with about 0.1—5 percent by weight of at least one polymeric organic stationary phase.

11. The process of Claim 10 wherein the polymeric organic stationary phase is selected from a polyphenyl sulfone, a polyphenyl ether, an organopolysiloxane, or a mixture of a polyphenyl sulfone and an organopolysiloxane.

12. A process for making a chromatographic separation of components contained in a sample which comprises:

(a) mixing the vaporized sample with an inert carrier gas, and

(b) contacting the sample-carrier gas mixture with the chromatographic column packing produced by the process of Claim 4, said packing being permeable by said mixture and comprising a silica support having a chemically bonded surface coating thereon.

**Patentansprüche**

1. Verfahren zur Herstellung einer chromatographischen Säulenfüllung durch chemische Bindung eines polymeren Siloxan-Überzugs an die Oberfläche eines siliciumhaltigen Feststoffes, gekennzeichnet durch die Stufen:

(a) Reagierenlassen einer säureaktivierten siliciumhaltigen Oberfläche mit $SiCl_4$ durch Inkontaktbringen, wodurch eine starke Chlorsilierung der Oberfläche verursacht wird,

(b) Reagierenlassen der chlorsilierten Oberfläche mit Wasserdampf durch Inkontakbringen bis im wesentlichen alle Chlorsilylgruppen zu Hydroxysilylgruppen hydrolysiert sind,

(c) Reagierenlassen der hydrolysierten Oberfläche mit einem Überschuß an Dichlorsilan der Formel $RR'SiCl_2$, worin jeder der Reste R und R' ein Methyl-, Äthyl- oder Vinylradikal bedeutet, durch Inkontaktbringen während einer Zeitspanne, die ausreicht, um mindestens den Großteil der Hydroxysilylgruppen in die korrespondierenden disubstituierten Chlorsilylgruppen überzuführen,

(d) Reagierenlassen des Reaktionsproduktes von (c) mit Wasserdampf durch Inkontaktbringen, bis im wesentlichen alle disubstituierten Chlorsilylgruppen zu den korrespondierenden disubstituierten Hydroxysilylgruppen hydrolysiert sind,

(e) Reagierenlassen des hydrolysierten Produktes von (d) von $SiCl_4$ durch Inkontaktbringen während einer Zeitspanne, die ausreicht, um im wesentlichen alle der disubstituierten Hydroxysilylgruppen in Silyloxychlorsilylgruppen überzuführen, und

(f) Reagierenlassen des chlorsilierten Produkts von (e) mit einem bezogen auf die Silyloxychlorsilylgruppen molaren Überschuß eines polymeren Siloxanpolyols im flüssigen Zustand durch Inkontaktbringen, wobei das Polyol ein Molekulargewicht von mindestens ca. 230 besitzt und eine Molekülstruktur aufweist, die im wesentlichen aus sich wiederholenden Einheiten der Formel

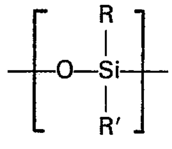

besteht, wobei im wesentlichen alle der Silyloxychlorsilylgruppen mit dem Polyol unter Bildung anhängender (pendant) Polyolreste, die mindestens eine terminale Hydroxygruppe pro Rest besitzen, reagieren.

2. Verfahren nach Anspruch 1, dadurch gekennzeichnet, daß die Stufenfolge (a) bis (f) ein-bis ca. viermal wiederholt wird.

3. Verfahren nach Anspruch 2, dadurch gekennzeichnet, daß die Stufen (a) und (e) unter Verwendung von gasförmigen $SiCl_4$ bei ca. 0°C bis 300°C durchgeführt werden, die Hydrolysen in den Stufen (b) und (d) mit Wasserdampf bei ca. 0°C bis 250°C durchgeführt werden, die Reaktion mit $RR'SiCl_2$ in Stufe (c) bei ca.

0°C bis 250°C durchgeführt wird, und die Reaktion mit dem polymeren Polyol in Stufe (f) bei ca. 0°C bis 300°C durchgeführt wird.

4. Verfahren nach Anspruch 2, dadurch gekennzeichnet, daß nach der letzten Stufenfolge (a) bis (f) das Produkt der letzten Stufe (f) durch Inkontaktbringen mit einem Trimethylsilyl-Abdeckreagens umgesetzt wird, wobei im wesentlichen alle der endständigen Hydroxygruppen der anhängenden Polyolreste mit Trimethylsilylgruppen verestert werden.

5. Verfahren nach Anspruch 2, dadurch gekennzeichnet, daß das Produkt der letzten Stufe (f) in irgendeiner alternierenden Reihenfolge mindestens einmal mit jedem der Chlorsilierungsreagentien $SiCl_4$ und $RR''SiCl_2$, worin R'' R, Phenyl, 2-Cyanoäthyl, 3-Cyanopropyl, oder 3,3,3-Trifluorpropyl bedeutet, umgesetzt wird, wobei nach jeder solchen Chlorsilierungsreaktion eine Hydrolysestufe folgt, und die Chlorsilierungsreaktionen und die Hydrolysestufen wie in den Stufen (a), (c) bzw. (b) angegeben durchgeführt werden, und das letzte hydrolysierte Produkt bei ca. 0 bis 300°C mit einem Trimethylsilyl-Abdeckreagens umgesetzt wird.

6. Verfahren nach Anspruch 5, dadurch gekennzeichnet, daß das Abdeckreagens gasförmiges $(CH_3)_3SiCl$ ist und die Abdeckreaktion bei ca. 50°C bis 275°C durchgeführt wird.

7. Verfahren nach Anspruch 5, dadurch gekennzeichnet, daß R, R' und R'' eine Methylgruppe darstellt.

8. Verfahren nach Anspruch 5, dadurch gekennzeichnet, daß R und R' eine Methylgruppe bedeuten und R'' eine 2-Cyanoäthylgruppe ist.

9. Verfahren nach Anspruch 5, dadurch gekennzeichnet, daß R und R' eine Methylgruppe bedeuten und R'' eine Vinylgruppe ist.

10. Verfahren nach Anspruch 4, dadurch gekennzeichnet, daß das durch Trimethylsilyl abgedeckte Produkt mit ca. 0,1 bis 5 Gew.-% von mindestens einer polymeren organischen stationären Phase beschichtet wird.

11. Verfahren nach Anspruch 10, dadurch gekennzeichnet, daß die polymere organische stationäre Phase ausgewählt ist aus einem Polyphenylsulfon, einem Polyphenyläther, einem Organopolysiloxan oder einer Mischung eines Polyphenylsulfons und eines Organopolysiloxans.

12. Verfahren zur Durchführung einer chromatographischen Trennung von in einer Probe enthaltenen Komponenten, welches umfaßt:

(a) Mischen der verdampften Probe mit einem inerten Trägergas, und

(b) Inkontaktbringen der Probe-Trägergas-Mischung mit der nach dem Verfahren von Anspruch 4 hergestellten chromatographischen Säulenfüllung, wobei die Füllung für die Mischung durchlässig ist und einen Siliciumdioxid-Träger mit einer chemisch gebundenen Oberflächenbeschichtung enthält.

**Revendications**

1. Procédé de préparation d'un garnissage pour colonne chromatographique par liaison par voie chimique d'un polymère de siloxane à la surface d'un solide siliceux, caractérisé par le fait qu'il comprend les stades suivants:

(a) une réaction par mise en contact d'une surface siliceuse activée par un acide avec $SiCl_4$, en provoquant ainsi une chlorosilylation sensible de ladite surface,

(b) une réaction par mise en contact de la surface chlorosilylée avec de la vapeur d'eau jusqu'à ce qu'essentiellement tous les groupes chlorosilyle aient été hydrolysés en groupes hydroxysilyle,

(c) une réaction par mise en contact de la surface hydrolysée avec un excès de dichlorosilane de formule $RR'SiCl_2$ dans laquelle R et R' représentent chacun un radical méthyle, éthyle ou vinyle pendant un temps suffisant pour faire réagir au moins la majeure partie des groupes hydroxysilyle de faon qu'ils forment des groupes chlorosilyle disubstitués correspondants,

(d) une réaction par mise en contact du produit de réaction du stade (c) avec de la vapeur d'eau jusqu'à ce qu'essentiellement tous les groupes chlorosilyle disubstitués aient été hydrolysés en groupes hydroxysilyle disubstitués correspondants,

(e) une réaction par mise en contact du produit hydrolysé du stade (d) avec $SiCl_4$ pendant un temps suffisant pour faire réagir sensiblement tous lesdits groupes hydroxysilyle disubstitués de façon qu'ils forment des groupes silyloxy chlorosilyle, et

(f) une réaction par mise en contact du produit chlorosilylé du stade (e) avec un excès molaire par rapport auxdits groupes silyloxy chlorosilyle d'un polyol polymère de siloxane à l'état liquide, ledit polyol ayant un poids moléculaire d'au moins 230 et ayant une structure moléculaire constituée essentiallement d'unités récurrentes de formule

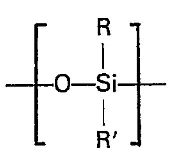

en faisant ainsi réagir essentiellement tous lesdits groupes silyloxy chlorosilyle avec ledit polyol de façon qu'ils forment des restes polyol pendants ayant au moins un groupe hydroxyle terminal par reste.

2. Procédé selon la revendication 1, caractérisé par le fait que l'on répète la succession des stades (a) à (f) de une à environ quatre fois.

3. Procédé selon la revendication 2, caractérisé par le fait que l'on met en oeuvre les stades (a) et (e) en utilisant du $SiCl_4$ gazeux à environ 0°C—300°C, on effectue les hydrolyses des stades (b) et (d) avec de la vapeur d'eau à environ 0°C—250°C, on effectue la réaction avec $RR'SiCl_2$ du stade (c) à environ 0°C—250°C, et on effectue la réaction du polyol polymère du stade (f) à environ 0°C—300°C.

4. Procédé selon la revendication 2, caractérisé par le fait qu'après la succession finale (a) à (f), on fait réagir le produit du stade (f) final en le mettant en contact avec un réactif de blocage triméthylsilyle, en éthérifiant essentiellement tous les groupes hydroxyle terminaux sur les restes polyol pendants par des groupes triméthylsilyle.

5. Procédé selon la revendication 2, caractérisé par le fait que l'on fait réagir le produit du stade (f) final dans un ordre d'alternances quelconque au moins une fois avec chacun des réactifs de chlorosilylation $SiCl_4$ et $RR''SiCl_2$ dans lequel R" est R, phényle, 2-cyanoéthyle, 3-cyanopropyle ou 3,3,3-trifluoropropyle, on fait suivre chacune ces réactions de chlorosilylation par un stade d'hydrolyse, on met en oeuvre les stades des réactions de chlorosilylation et de ladite hydrolyse respectivement tels que définis dans les stades (a), (c) et respectivement (b) et on fait réagir le produit hydrolysé final à environ 0—300°C avec un réactif de blocage triméthylsilyle.

6. Procédé selon la revendication 5, caractérisé par le fait que le réactif de blocage est $(CH_3)_3SiCl$ gazeux et qu'on effectue la réaction de blocage à environ 50°C—275°C.

7. Procédé selon la revendication 5, caractérisé par le fait que R, R' et R'' représentent chacun un groupe méthyle.

8. Procédé selon la revendication 5, caractérisé par le fait que R et R' représentent chacun un groupe méthyle et que R'' est un groupe 2-cyanoéthyle.

9. Procédé selon la revendication 5, caractérisé par le fait que R et R' représentent chacun un groupe méthyle et que R'' est un groupe vinyle.

10. Procédé selon la revendication 4, caractérisé par le fait que l'on applique sur le produit bloqué par triméthylsilyle en revêtement avec environ 0,1—5% en poids d'au moins une phase organique polymère stationnaire.

11. Procédé selon la revendication 10, caractérisé par le fait que la phase organique polymère stationnaire est choisie parmi une polyphényl sulfone, un polyphényl éther, un organopolysiloxane ou un mélange d'une polyphényle sulfone et d'un organopolysiloxane.

12. Procédé pour effectuer une séparation chromatographique de constituants contenus dans un échantillon, caractérisé par le fait qu'il consiste en ce que:

(a) on mélange l'échantillon à l'état de vapeur avec un gaz vecteur inerte, et

(b) on met en contact le mélange de l'échantillon et du gaz vecteur avec le garnissage d'une colonne chromatographique produit par mise en oeuvre du procédé selon la revendication 4, ledit garnissage étant perméable audit mélange et comprenant un support de silice comportant un revêtement de surface lié chimiquement.